# EUROPÄISCHE PATENTSCHRIFT

(11) **EP 3 667 146 B1**
(45) Veröffentlichungstag und Bekanntmachung des Hinweises auf die Patenterteilung: **12.10.2022**
(21) Anmeldenummer: 19000560.3
(22) Anmeldetag: 13.12.2019
(51) Int. Cl.: F16L 29/04, F16L 55/115

(54) **KUPPLUNG FÜR FLUIDE**
FLUID COUPLING
ACCOUPLEMENT POUR FLUIDES

(30) Priorität: 13.12.2018 DE 102018132052; 04.07.2019 DE 102019118119
(43) Veröffentlichungstag der Anmeldung: 17.06.2020
(73) Patentinhaber: Cold Solutions VBB Kältetechnik GmbH, 99974 Mühlhausen (DE)
(72) Erfinder: Behrends, Anke, 99974 Mühlhausen (DE)
(74) Vertreter: Misselhorn, Hein-Martin

(56) Entgegenhaltungen:
- DE-A1- 2 320 814
- GB-A- 600 070
- US-A- 4 002 186
- US-A1- 2018 180 201

## Beschreibung

### Technisches Gebiet

Die vorliegende Erfindung betrifft eine Kupplung, insbesondere eine selbstschließende Kupplung für Fluide gemäß dem Obersatz des Patentanspruchs 1.

### Stand der Technik

Selbstschließende Kupplungen für den Flüssigkeits- und Gastransfermüssen im gekoppelten als auch jede Kupplungshälfte im entkoppelten Zustand dauerhaft und zuverlässig technisch dicht sein. Neben diesen Eigenschaften werden minimale Lufteinschlüsse beim Koppeln sowie kleinste Flüssigkeits-, Dampf- und Gasverluste beim Entkoppeln gefordert.

Aus dem Stand der Technik bekannte selbstschließende Kupplungen sind in der Regel aus zwei formschlüssig miteinander verbindbaren Kupplungshälften gebildet, die durch Schließfedern gegeneinander beaufschlagt sind, wobei an den beiden Kupplungshälften axial wirkende Dichtelemente vorgesehen ist, die den Strömungsweg des Fluids gegenüber der Atmosphäre im entkoppelten Zustand der Kupplungshälften abdichten.

Hierzu wird in der Regel ein Thermoplast als Dichtmaterial verwendet. Die Wirksamkeit dieser Dichtungen ist abhängig vom Zustand der Dichtflächen, des Dichtmaterials, der Federkraft der Schließfedern und ggf. des inneren Druckes. Hierbei wirkt sich ein Unterdruck gegenüber Umgebungsdruck nachteilig aus.

Trotz verbesserter Kaltflusseigenschaften und besserer Rückstellverhalten neuer als Dichtungswerkstoff eingesetzter Thermoplaste wirken sich diese Eigenschaften insbesondere bei wiederholten Kopplungsvorgängen gleichfalls negativ auf die technische Dichtheit aus. Das Schließen der Kupplungshälften während des Entkoppelns erfolgt in das Flüssigkeits-, Dampf- oder Gasvolumen. Auch kleinste Fremdkörper oder Partikel können während des Schließvorgangs der Kupplungshälften zwischen Dichtung und Sitz eingeklemmt werden. Hierdurch können Leckagen entstehen.

Aufgrund der axialen Abdichtung der Kupplungshälften wird bei einigen am Markt verfügbaren Kupplungen konstruktiv bedingt nicht vernachlässigbare Luftmengen während des Koppelns in ein ansonsten geschlossenes System eingebracht. Besonders in der Kälte- und Klimatechnik hat dies bei wiederholten Kopplungsvorgängen negative Auswirkungen auf die Funktionsfähigkeit der verbundenen Kreisläufe.

Die DE 23 20 814 A1 offenbart eine Vorrichtung zum Verbinden zweier Druckmittelleitungen.

### Darstellung der Erfindung

Der vorliegenden Erfindung liegt die Aufgabe zugrunde, eine Kupplung zu schaffen, die eine dauerhafte und zuverlässige technisch hohe Dichtheit auch im entkoppelten Zustand der Kupplungshälften sichert.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Kupplung sind in den abhängigen Unteransprüchen angegeben.

Erfindungsgemäß sind die Dichtelemente als Schiebekolben ausgeführt und liegen in einem Sitzbereich an Abdichtungsorganen abdichtend an, wobei an den Schiebekolben und/oder den Abdichtungsorganen radial wirkende Dichtungen vorgesehen sind, die an den berandenden Sitzflächen der Abdichtungsorgane und/oder der Schiebekolben abdichten. Die Abdichtungsorgane sind als Kolbenstangen ausgebildet.

Der Vorteil der vorliegenden Erfindung besteht darin, dass sämtliche eingesetzten Dichtungen radial wirken. Die in Abhängigkeit der Medien ausgewählten Werkstoffe gehören vorteilhafterweise zu den (Synthese-) Kautschuken, welche eine hohe Abriebfestigkeit, Zug- und Reißfestigkeit und vor allem einen geringen Druckverformungsrest aufweisen. Neben O-Ringen oder X-Ringen können auch andere für radiale Abdichtungen geeignete Geometrien und Werkstoffe für die Dichtungen verwendet werden.

Die Radialdichtungen dichten im entkoppelten Zustand der einen (männlichen) Kupplungshälfte und der anderen (weiblichen) Kupplungshälfte die Strömungswege gegenüber der Atmosphäre ab.

Beide Kupplungshälften können mit vielfältigen Leitungsanschlüssen versehen werden, um das Verbinden mit unterschiedlichen Leitungen, Schläuchen etc. und verschiedenen Anschlussarten zu gewährleisten. Das Abdichten kann auf vielfältigste Art z.B. durch Dichtungen, Kleben, Löten etc. erfolgen. Möglich ist auch, die gewünschten Anschlüsse in einem Stück mit den Gehäusen der beiden Kupplungshälfte zu fertigen.

### Kurzbeschreibung der Zeichnungen

Weitere Ziele, Merkmale, Vorteile und Anwendungsmöglichkeiten der erfindungsgemäßen Kupplung ergeben sich aus der nachfolgenden Beschreibung eines Ausführungsbeispiels anhand der Zeichnungen.

In den Zeichnungen zeigen
Fig. 1 die Kupplungshälften im entkoppelten Zustand;

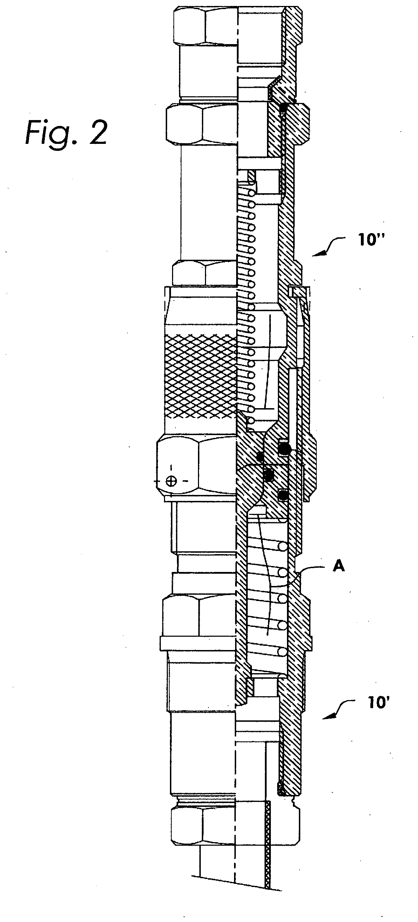

Fig. 2 Kupplungshälften im gekoppelten Zustand;

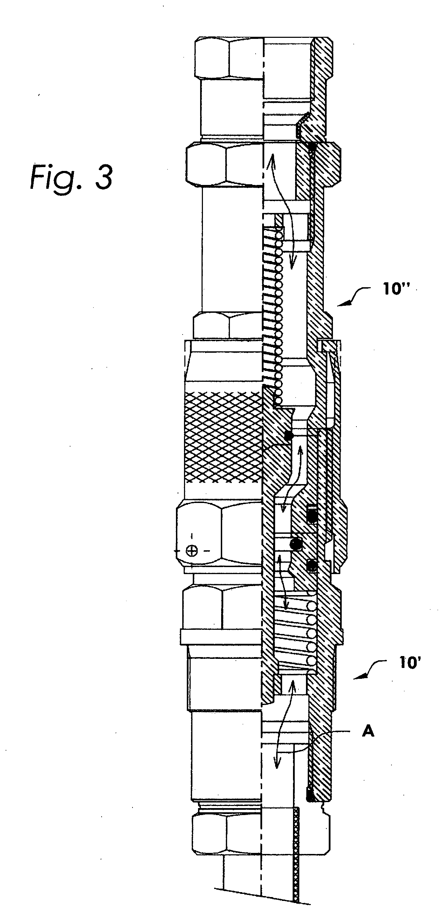

Fig. 3 Kupplungshälften im vollständig gekoppelten Zustand.

### Ausführung der Erfindung

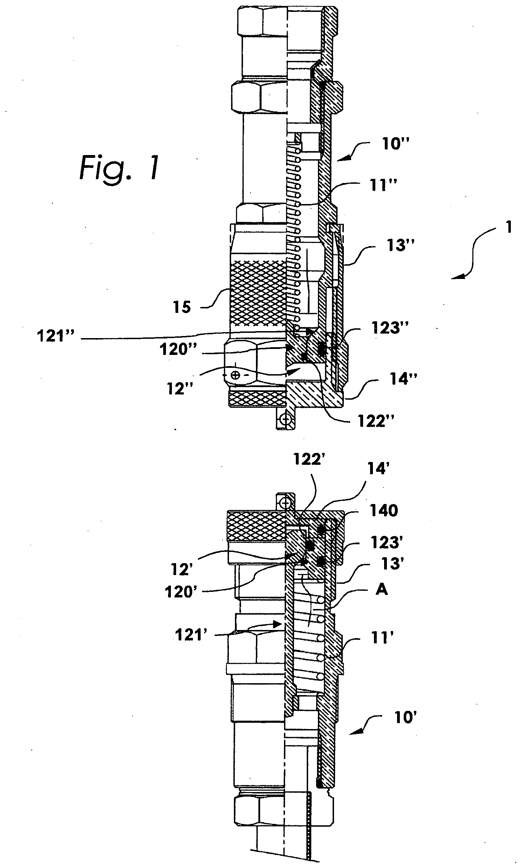

Wie aus Fig. 1 ersichtlich, umfasst die erfindungsgemäße Kupplung 1 zwei formschlüssig miteinander verbindbare Kupplungshälften 10',10", die durch Krafterzeugungselemente 11', 11" gegeneinander beaufschlagt sind, wobei an den beiden Kupplungshälften 10',10" radiale Dichtelemente 12',12'' vorgesehen sind, die den Strömungsweg des Fluids gegenüber der Atmosphäre im entkoppelten Zustand der Kupplungshälften 10',10" abdichten. Wie aus den Figurenzeichnungen ersichtlich, sind die Krafterzeugungsemente 11',11" hierbei vorteilhafterweise als Schließfedern 11',11" ausgebildet. Als Krafterzeugungsemente kommen aber neben den dargestellten Schließfedern 11',11" auch sämtliche weiteren zur Erzeugung einer linearen Kraft geeigneten Krafterzeugungseinrichtungen in Betracht wie bspw. hydraulische, pneumatische Druckerzeugungseinrichtung oder elektromechanische Krafterzeugungseinrichtungen.

Die Abdichtungsorgane sind als Kolbenstangen 121', 121" ausgebildet und die Schiebekolben 120', 120" und die Kolbenstangen 121', 121" der beiden Kupplungshälften 10',10" sind jeweils gegeneinander verschieblich in den Gehäusen der beiden Kupplungshälften 10',10" angeordnet. Erläuternd an Hand der Fig. 1 sei gesagt, dass das hier in einem sehr weitläufigen Sinne als "Kolbenstange" 121"bezeichnete Bauteil Bestandteil des Gehäuses der Kupplungshälfte 10" ist, und damit keine "Kolbenstange" im engeren Sinne darstellt, wie man an Hand der Fig. 1 und der anderen Figuren sieht.

Die Schiebekolben 120', 120" sind dabei vorteilhafterweise mit bereichsweise unterschiedlichen Durchmessern abgestuft ausgebildet und liegen zumindest in einer Richtung aufgrund ihrer Abstufung formschlüssig an den Abdichtungsorganen an. Durch das Verschieben der Schiebekolben 120', 120" entgegen die Druckkraft der Schließfedern 11', 11" wird die Dichtwirkung der Dichtelemente 12',12" aufgehoben.

In einer bevorzugten Ausführungsform der Erfindung erfolgt die Abdichtung beider Kupplungshälften 10',10" gegenüber der Atmosphäre im gekoppelten Zustand durch die zwischen der Gehäusewand 13' der männlichen Kupplungshälfte 10' und dem Schiebekolben 120" der weiblichen Kupplungshälfte 10" wirkenden weiteren Radialdichtung 123".

Weiterhin ist es vorteilhaft, dass die beiden Kupplungshälften 10',10" mittels korrespondierenden Gewinden miteinander verschraubt werden, wobei während des Verschraubens beider Kupplungshälften 10',10" einerseits die Kolbenstange 121" den Schiebekolben 120' der einen Kupplungshälfte 10' gegen die Kraft der Schließfeder 11' in das Gehäuse der einen Kupplungshälfte 10' und andererseits die Kolbenstange 121' den Schiebekolben 120" gegen die Kraft der Schließfeder 11" in das Gehäuse der anderen Kupplungshälfte 10" schiebt.

Auf der Kopplungsseite der beiden Kupplungshälften 10',10" sind vorzugsweise jeweils Schutzkappen 14' und 14" vorgesehen, wobei die Schutzkappe 14' auf der einen Kupplungshälfte 10' mindestens eine Radialdichtung 140 umfasst, während die Schutzkappe 14" auf der anderen Kupplungshälfte 10" eine am Gehäuse der Kupplungshälfte 10" vorgesehene Radialdichtung 100 nutzt.

### Vorgang des Koppelns

Um eingeschlossene Luft beim Koppeln auf ein Minimum zu reduzieren, fügen sich der Schiebekolben 120' und Kolbenstange 121' der männlichen Kupplungshälfte 10' flächenbündig mit dem Schiebekolben 120" und dem Gehäuse bzw. der dort gebildeten Kolbenstange 121" der weiblichen Kupplungshälfte 10" zusammen, bevor die Abdichtung der Kupplung 1 mithilfe einer Radialdichtung 123" der weiblichen Kupplungshälfte 10" beginnt.

Während des Verschraubens beider Kupplungshälften 10',10" mit der Gewindehülse 15 schiebt einerseits die Kolbenstange 121' den Schiebekolben 120" der weiblichen Kupplungshälfte 10" gegen die Kraft der Schließfeder 11" in das Gehäuse der weiblichen Kupplungshälfte 10" und andererseits wird der Schiebekolben 120' der männlichen Kupplungshälfte 10' durch das Gehäuse der weiblichen Kupplungshälfte 10" bzw. durch den dort Kolbenstange 121" genannten Abschnitt gegen die Kraft der Schließfeder 11' in das Gehäuse der männlichen Kupplungshälfte 10' geschoben.

Bis die Abdichtung beider Kupplungshälften 10',10" gegenüber der Atmosphäre durch die Radialdichtung vollständig hergestellt ist, bleibt die Dichtwirkung der Radialdichtung 122' vollständig erhalten. Der Verschluss des Strömungswegs (A) ist weiterhin gegeben Nach dem Herstellen der vollständigen Wirkung der Radialdichtungen 123',123" durch Einschieben des Gehäuses der Kupplungshälfte 10" in das Gehäuse der männlichen Kupplungshälfte 10' wird mit weiterem Aufschrauben der Gewindehülse 15 der weiblichen Kupplungshälfte 10" auf das Gehäuse der männlichen Kupplungshälfte 10' die Dichtwirkung der Radialdichtungen 122',122" aufgehoben und der Strömungsweg (A) geöffnet.

Ist die Gewindehülse 15 vollständig aufgeschraubt und beide Kupplungshälften 10',10" vollständig gekoppelt, ist der der Strömungsweg voll geöffnet und gegenüber Atmosphäre technisch dicht. Die Schiebefedern 11',11" der Kupplungshälfte 10',10" haben dabei keinen Einfluss auf die Wirksamkeit der Abdichtung der Kupplung gegenüber der Atmosphäre.

### Vorgang des Entkoppelns

Der Vorgang des Entkoppelns wird durch Lösen der Gewindehülse 15 der weiblichen Kupplungshälfte 10" eingeleitet. Dabei schiebt die Schließfeder 11' die Radialdichtung 122' des Schiebekolbens 120' in den Dichtungssitz 100' des Gehäuses der männlichen Kupplungshälfte 10". Im gleichen Sinn wird die Radialdichtung 122" durch Schließfeder 11" wieder in den Dichtungssitz 100" des Gehäuses bzw. des dort "Kolbenstange" genannten Abschnitts 121" der Kupplungshälfte 10" verschoben. Mögliche Verunreinigungen oder Partikel in den transportierten Flüssigkeiten, Dämpfen oder Gase werden bei diesem Vorgang vor den Radialdichtungen hergeschoben. Die Wahrscheinlichkeit, dass sich diese zwischen Dichtung und Sitz setzen können, ist minimiert bzw. bei Wahl entsprechender Dichtungsgeometrie der Radialdichtungen 122', 122" nahezu ausgeschlossen.

Bis die vollständige Dichtwirkung der Radialdichtungen 122' des Schiebekolbens 120' der männlichen Kupplungshälfte 10' und des Schiebekolbens 120" der weiblichen Kupplungshälfte 10" wieder hergestellt und der Strömungsweg (A) unterbrochen ist, bleibt die Dichtwirkung der Radialdichtung 123 erhalten. Die Kupplung 1 ist bis zu diesem Zeitpunkt gegenüber der Atmosphäre technisch dicht.

Wird die Gewindehülse 15 weiter gelöst, werden die Kupplungshälften 10',10" getrennt und die Dichtwirkung der Radialdichtung 123 aufgehoben.

Ausschließlich das während des Entkopplungsvorganges eingeschlossene Medium im Spalt zwischen dem Schiebekolben 120', der Kolbenstange 121' und zwischen dem Schiebekolben 120", des Gehäuses der weiblichen Kupplungshälfte 10" sowie zwischen den Radialdichtungen 122',122" wird dabei freigesetzt.

Die Schließfeder 11' der männlichen Kupplungshälfte 10' und die Schließfeder 11" der weiblichen Kupplungshälfte 10" haben keinen Einfluss auf die Wirksamkeit der Abdichtung der Kupplungshälften 10',10" gegenüber der Atmosphäre im entkoppelten Zustand. Die Schließfeder 11',11" dienen lediglich der Rückführung der Radialdichtungen 122',122" in den Dichtungssitz 100',100". Wird eine Dichtungsgeometrie der Radialdichtungen 122',122" gewählt, welche eine verringerte Reibung verursacht, kann die Kraft der Schließfedern 11',11'' entsprechend gering gewählt werden. Bei der Auslegung der Schließfedern 11',11" ist die Kraft der Atmosphäre auf die Schiebekolben 120',120" zu berücksichtigen, falls im Inneren der Kupplungshälften 10',10" ein Unterdruck herrscht. Ein Unter- druck hat keinen direkten Einfluss auf die Wirksamkeit der Abdichtungen der Kupplungshälften 10',10" gegen die Umgebung. Es muss allerdings verhindert werden, dass sich die Radialdichtungen 122',122'' ungewollt aus dem Dichtungssitz schieben.

Die erfindungsgemäße Kupplung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Sonstiges

Auffallend an den Figuren und besonders bevorzugt ist, dass die Kolbenstange 121" einen Anschlag für den Schiebekolben 120" bildet, durch den dessen Bewegbarkeit in axialer Richtung begrenzt wird, vorzugsweise durch Anlaufen eines radialen Vorsprungs des Schiebekolbens 120" gegen die Kolbenstange 121". Sinngemäß gleiches fällt an Hand der Zeichnungen für den Schiebekolben 120' auf. Für diese bildet die Kolbenstange 121' einen Anschlag, der die axiale Bewegbarkeit (in einer Richtung auch hier) beschränkt. Vorzugsweise erfolgt das nur dadurch, dass der Schiebekolben 121' eine entsprechende Ausbuchtung in radial auswärtiger Richtung besitzt, wie in den Figuren dargestellt.

Zusammenfassend und ganz allgemein gesagt, auch unabhängig oder zusätzlich oder in Kombination mit den bisher aufgestellten Ansprüchen wird auch Schutz für Folgendes beansprucht:
Kupplung 1 für Fluide, umfassend zwei formschlüssig miteinander verbindbare Kupplungshälften 10',10", die durch Krafterzeugungselemente 11, 11" gegeneinander beaufschlagt sind, wobei an den beiden Kupplungshälften 10', 10" Dichtelemente 12',12" vorgesehen sind, die den Strömungsweg des Fluids gegenüber der Atmosphäre im entkoppelten Zustand der Kupplungshälften 10',10" abdichten, dadurch gekennzeichnet, dass die Dichtelemente 12', 12" als Schiebekolben 120', 120" ausgeführt sind und in einem Sitzbereich an Abdichtungsorganen abdichtend anliegen, wobei an den Schiebekolben 120', 120" und/oder den Abdichtungsorganen radial wirkende Dichtungen 122', 122" vorgesehen sind, die an den berandenden Sitzflächen der Schiebekolben 120', 120" und/oder der Abdichtungsorgane abdichten.

Wobei die die formschlüssig miteinander verbindbaren Kupplungshälften so gestaltet sind, dass sie in vollständig formschlüssig miteinander gekuppeltem Zustand einen Strömungsweg A durch die Kupplung freigeben, und wobei eine Kupplungshälfte 10' ein die Gehäusewandung 13' bildendes Außengehäuse AG' aufweiset, in dem eine auf Kolbenstange 121' derart in einer Position auf der Mittellängsachse L des Außengehäuses gehalten wird und die Kolbenstange 121' derart gestaltet ist, dass der Schiebekolben 120' bei entkoppelter Kupplungshälfte durch das ihm zugeordnete Krafterzeugungselement 11' in den Spalt zwischen der Kolbenstange 121' und dem Außengehäuse AG" geschoben wird, so dass er ihn dicht verschließt und wobei die andere Kupplungshälfte 10" ein eine Gehäusewandung 13" bildendes Außengehäuse AG" aufweist, das einen Gehäuseabschnitt besitzt, der eine Kolbenstange 121" bildet, wobei die Kolbenstange 121" derart gestaltet ist, dass der in einer Position auf der Mittellängsachse L des Außengehäuses gehaltene Schiebekolben 120" bei entkoppelter Kupplungshälfte die Mündung der Kolbenstange 121" dicht verschließt.

Im Regelfall ist die Kupplung darüber hinaus so gestaltet, dass im Zuge des Aneinanderkuppelns der bisher entkoppelten Kupplungshälften 10', 10" der Schiebekolben 120" und die Kolbenstange 121' mit ihren freien Stirnseiten gegeneinander zur Anlage kommen und dass dabei auch der Schiebekolben 120' und die Kolbenstange 121" mit ihren freien Stirnseiten gegeneinander zur Anlage kommen , wobei in diesem Zustand der Schiebekolben 120" dichtend in der Kolbenstange 121" angeordnet ist und die Kolbenstange 121' dichtend in dem Schiebekolben 120' angeordnet ist und der Schiebekolben 120' dicht gegen die Gehäusewandung 13' des Außengehäuses 13' anliegt und die Kolbenstange 121" dicht gegen die Gehäusewandung 13' des Außengehäuses AG' anliegt derart dass zwischen dem Schiebekolben 120', der Kolbenstange 121', dem Schiebekolben 120", der Kolbenstange 121 und der Gehäusewandung (im Wesentlichen und außerhalb der permanenten Fluidführung des jeweiligen Kupplungshälfte) kein Freiraum bleibt in dem Fluid eingeschlossen wird, was rein verbal, "Position A" genannt werden soll.

Man kann die Verhältnisse in Position A auch mit alternativen Worten beschreiben. Im Regelfall ist die Kupplung darüber hinaus so gestaltet, dass im Zuge des Aneinanderkuppelns der bisher entkoppelten Kupplungshälften 10', 10" eine Position A reicht wird in der folgende Konfiguration gegeben ist:
Der Schiebekolben 120' und die Kolbenstange 121' liegen koaxial ineinander und bilden zur Außenseite der sie haltenden Kupplungshälfte hin eine kontinuierliche gemeinsame Stirnfläche mit der sie gegen die kontinuierliche gemeinsame Stirnfläche anliegen, die der Schiebekolben 120" und die Kolbenstange 121", die ebenfalls koaxial ineinander angeordnet sind, zur Außenseite der sie haltenden Kupplungshälfte bilden, dabei dichten die Schiebekolben 120'und 120" sowie die Kolbenstangen 121' und 121" die Mündung des Außengehäuses AG' vollständig ab. Die besagten Bauteile bilden zwischen sich nirgendwo einen nicht von einer Dichtung besetzten Freiraum ab.

So oder so gilt bevorzugt Folgendes:
Im Regelfall ist die Kupplung bzw. eine ihrer Kupplungshälften (10' oder 10") darüber hinaus so gestaltet, dass die Kolbenstange 121" an ihren mündungsseitigen Ende nach innen vorspringt, und der Schiebekolben 120" ist so gestaltet, sich sein Außendurchmesser hinter seiner dem anderen Kupplungselement zugewandten freien Stirnseite vergrößert, so dass die Kolbenstange 121" den Verschiebeweg des Schiebekolbens 120" in Richtung axial nach außen begrenzt.

Im Regelfall ist die Kupplung bzw. eine ihrer Kupplungshälften (10" oder 10') darüber hinaus so gestaltet, dass die Kolbenstange 121' an ihren mündungsseitigen Ende nach außen vorspringt, und der Schiebekolben 120' ist so gestaltet, sich sein Innendurchmesser hinter seiner dem anderen Kupplungselement zugewandten freien Stirnseite vergrößert, so dass die Kolbenstange 121' den Verschiebeweg des Schiebekolbens 120' in Richtung axial nach außen begrenzt.

Im Regelfall ist die Kupplung darüber hinaus so gestaltet, dass beim Fortsetzen des Kuppelns nach Erreichen der Position A durch weiteres Aufeinanderzubewegen der Kupplungshälften die Kolbenstange 121' den Schiebekolben 120" tiefer in Richtung der Mittellängsachse L in die Kolbenstange 121" hineinschiebt und die Kolbenstange 121" den Schiebekolben 120' tiefer in Richtung der Mittellängsachse L in das Außengehäuse AG' hineinschiebt, wodurch der Strömungsweg A durch die Kupplung freigegeben wird.

Der Strömungsweg verläuft dabei vorzugsweise gerade, d. h. er weist keine ununterbrochene Abwinkelung von mehr als 45° auf.

Festzuhalten zum Verständnis von Worten wie "ohne Gaseinschluss" oder "kein Freiraum" ist, dass die minimalen Fluideinschlüsse (Fluidreste), die beispielsweise in einer Nut verbleiben die nur Großteils von dem von ihr gehaltenen O-Ring oder Dichtungsring ausgefüllt wird, hierbei vernachlässigbar sind. Sinngemäß gleiches gilt für Fluidfilme im Bereich von Passungsbedingten Kleinspalten zwischen gleitend relativzueinander verschiebbaren Bauteilen.

Vorzugsweise bildet im gekoppelten Zustand der Schiebekolben 120' der männlichen Kupplungshälfte 10' mit der Kolbenstange 121" der weiblichen Kupplungshälfte 10" eine erste Kontaktfläche, wobei im gekoppelten Zustand der Schiebekolben 120' ' der weiblichen Kupplungshälfte 10" mit der Kolbenstange 121' der männlichen Kupplungshälfte 10' eine zweite Kontaktfläche bildet, wobei die erste Normale der ersten Kontaktfläche und die zweite Normale der zweiten Kontaktfläche etwa parallel zueinander und etwa parallel zur axialen Richtung der Kupplung 1 sind.

### Liste der Bezugsziffern

- 1: Kupplung
- 10': männliche Kupplungshälfte
- 10": weibliche Kupplungshälfte
- 11',11": Krafterzeugungselemente / Schließfedern
- 12',12": Dichtelemente
- 13',13": Gehäusewandungen
- 14',14": Schutzkappen
- 15: Gewindehülse
- 100',100": Dichtungssitze
- 120', 120": Schiebekolben
- 121': Kolbenstange
- 121": Als "Kolbenstange" bezeichneter Gehäuseabschnitt
- 122',122": Radialdichtungen
- 123',123": Radialdichtung an den Gehäusewandungen
- 140: Radialdichtung an der Schutzkappe 14'
- (A): Strömungsweg
- AG' bzw. AG": Außengehäuse

## Patentansprüche

1. Kupplung (1) für Fluide, umfassend zwei formschlüssig miteinander verbindbare Kupplungshälften (10', 10"), eine männliche Kupplungshälfte (10') und eine weibliche Kupplungshälfte (10"), die durch Krafterzeugungselemente (11', 11") gegeneinander beaufschlagt sind, wobei an den beiden Kupplungshälften (10', 10") Abdichtungsorgane und Dichtelemente (12', 12") vorgesehen sind, die den Strömungsweg des Fluids gegenüber der Atmosphäre im entkoppelten Zustand der Kupplungshälften (10', 10") abdichten, wobei
die Dichtelemente (12', 12") als Schiebekolben (120', 120") ausgeführt sind und in einem Sitzbereich an den Abdichtungsorganen abdichtend anliegen,
wobei an den Schiebekolben (120', 120") und/oder den Abdichtungsorganen radial wirkende Dichtungen (122', 122") vorgesehen sind, die an den berandenden Sitzflächen der Abdichtungsorgane und/oder der Schiebekolben (120', 120") abdichten, dass die Abdichtungsorgane als Kolbenstangen (121', 121") ausgebildet sind, **dadurch gekennzeichnet,**
**dass** sich der Schiebekolben (120') und die Kolbenstange (121') der männlichen Kupplungshälfte (10') flächenbündig mit dem Schiebekolben (120'') und dem Gehäuse bzw. der dort gebildeten Kolbenstange (121'') der weiblichen Kupplungshälfte (10") zusammen fügen, bevor die Abdichtung der Kupplung (1) mithilfe einer weiteren Radialdichtung (123") der weiblichen Kupplungshälfte (10") beginnt, um eingeschlossene Luft beim Koppeln auf ein Minimum zu reduzieren.

2. Kupplung (1) nach Anspruch 1, **dadurch gekennzeichnet, dass** ² die Schiebekolben (120', 120") und die Kolbenstangen (121', 121") der beiden Kupplungshälften (10', 10") jeweils gegeneinander verschieblich in den Gehäusen der beiden Kupplungshälften (10', 10") angeordnet sind.

3. Kupplung (1) nach Anspruch 1 oder 2, **dadurch gekennzeichnet, dass** die Schiebekolben (120', 120") mit. bereichsweise unterschiedlichen Durchmessern abgestuft ausgebildet sind und zumindest in einer Richtung aufgrund ihrer Abstufung formschlüssig an den Abdichtungsorganen anliegen.

4. Kupplung (1) nach einem der vorangegangenen Ansprüche, **dadurch gekennzeichnet, dass** durch das Verschieben der Schiebekolben (120', 120") entgegen die Druckkraft der Krafterzeugungselemente (11', 11") die Dichtwirkung der Dichtelemente (12', 12") aufgehoben wird.

5. Kupplung (1) nach einem der vorangegangenen Ansprüche, **dadurch gekennzeichnet, dass** die Abdichtung beider Kupplungshälften (10', 10") gegenüber der Atmosphäre im gekoppelten Zustand durch die zwischen der Gehäusewand (13') der männlichen Kupplungshälfte (10') und der Kolbenstange (121") der weiblichen Kupplungshälfte (10") wirkenden weiteren Radialdichtung (123") erfolgt.

6. Kupplung (1) nach einem der vorangegangenen Ansprüche 2 bis 4, **dadurch gekennzeichnet, dass** die beiden Kupplungshälften (10', 10") mittels korrespondierenden Gewinden miteinander verschraubt werden, wobei während des Verschraubens beider Kupplungshälften (10', 10") einerseits die Kolbenstange (121") den Schiebekolben (120') der einen Kupplungshälfte (10') gegen die Kraft des Krafterzeugungselements (11') in das Gehäuse der einen Kupplungshälfte (10') und andererseits die Kolbenstange (121')- den Schiebekolben (120") gegen die Kraft des als Schließfeder (11") ausgebildeten Krafterzeugungselements (11")³ in das Gehäuse der anderen Kupplungshälfte (10") geschoben wird.

7. Kupplung (1) nach einem der vorangegangenen Ansprüche, **dadurch gekennzeichnet, dass** jeweils auf der Kupplungsseite beider Kupplungshälften (10' ,10") Schutzkappen (14') und (14") vorgesehen sind, wobei die Schutzkappe (14') auf der einen Kupplungshälfte (10') mindestens eine Radialdichtung (140) umfasst, während die Schutzkappe (14") auf der anderen Kupplungshälfte (10") die Radialdichtung (123")⁴ nutzt.

## Claims

1. Coupling (1) for fluids, comprising two coupling halves (10', 10"), male and female, which can be connected to one another in a positive locking manner, one male coupling half (10') and one female coupling half (10") which act against one another by force-generating elements (11', 11"), wherein sealing members and sealing elements (12', 12") are provided on the two coupling halves (10', 10"), which seal the flow path of the fluid against the atmosphere, when the coupling halves (10', 10") are decoupled, wherein the sealing elements (12', 12") are designed as sliding pistons (120', 120") and rest in a sealing manner on the sealing members in a seating area, wherein radially acting seals (122', 122") are provided on the sliding pistons (120', 120") and/or the sealing members, which radially acting seals (122', 122") seal on the bordering seating areas of the sealing members and/or the sliding pistons (120', 120"), that the sealing members are designed as piston rods (121', 121"), **characterized in that** the sliding piston (120') and the piston rod (121') of the male coupling half (10') are flush with the sliding piston (120") and the housing or the piston rod (121") of the female coupling half (10") formed there before sealing of the coupling (1) begins by means of another radial seal (123") of the female coupling half (10") to minimize trapped air during coupling.

2. Coupling (1) according to claim 1, **characterized in that** the sliding pistons (120', 120") and the piston rods (121', 121") of the two coupling halves (10', 10") are arranged in the housings of the two coupling halves (10', 10") so that they can be displaced relative to one another.

3. Coupling (1) according to claim 1 or 2, **characterized in that** the sliding pistons (120', 120") are graded with regionally different diameters and, due to their grading, rest on the sealing members in a positive locking manner at least in one direction.

4. Coupling (1) according to one of the preceding claims, **characterized in that** the sealing effect of the sealing elements (12', 12") is canceled by the displacement of the sliding pistons (120', 120") against the compressive force of the force-generating elements (11', 11").

5. Coupling (1) according to one of the preceding claims, **characterized in that**, in the coupled state, the sealing of the two coupling halves (10', 10") against the atmosphere is made by the further radial seal (123") acting between the housing wall (13') of the male coupling half (10') and the piston rod (121") of the female coupling half (10").

6. Coupling (1) according to one of the preceding claims 2 to 4, **characterized in that** the two coupling halves (10', 10") are screwed together by means of corresponding threads, wherein during the screwing of the two coupling halves (10', 10"), on the one hand the piston rod (121") pushes the sliding piston (120') of the one coupling half (10') against the force of the force-generating element (11') into the housing of the one coupling half (10') and, on the other hand, the piston rod (121') pushes the sliding piston (120" ) against the force of the force-generating element (11') designed as a closing spring (11") into the housing of the other coupling half (10").

7. Coupling (1) according to one of the preceding claims, **characterized in that** on each coupling side of the two coupling halves (10', 10") protective caps (14') and (14") are provided, wherein the protective cap (14 ') on the one coupling half (10') comprises at least one radial seal (140), while the protective cap (14") on the other coupling half (10") uses the radial seal (123").

## Revendications

1. Dispositif d'accouplement (1) pour fluides comprenant deux demi-accouplements (10', 10"), mâle et femelle, qui peuvent être reliés l'un à l'autre par liaison mécanique, un demi-accouplement mâle (10') et un demi-accouplement femelle (10") qui agissent l'un par rapport à l'autre par des éléments générateurs de force (11', 11"), des éléments d'étanchement et des éléments de joint (12', 12") étant prévus sur les deux demi-accouplements (10', 10"), qui étanchent le trajet d'écoulement du fluide à l'atmosphère, lorsque les demi-accouplements (10', 10") sont désaccouplés, les éléments de joint (12', 12") étant réalisés sous forme de pistons coulissants (120', 120") et reposant sur les éléments d'étanchement de manière étanche dans une zone d'appui, des joints à effet radial (122', 122") étant prévus sur les pistons coulissants (120', 120") et/ou les éléments d'étanchement, les joints à effet radial (122', 122") assurant l'étanchéité dans les zones d'appui en bordure des éléments d'étanchement et/ou des pistons coulissants (120', 120"), en ce que les éléments d'étanchement sont réalisés sous forme de tiges de piston (121', 121"), **caractérisé en ce que** le piston coulissant (120') et la tige de piston (121') du demi-accouplement mâle (10') se joignent de manière affleurée avec le piston coulissant (120") et le boîtier ou la tige de piston (121") du demi-accouplement femelle (10") formée là, avant que l'étanchéité de l'accouplement (1) commence au moyen d'un autre joint radial (123") du demi-accouplement femelle (10") pour réduire l'air emprisonné pendant l'accouplement à un minimum.

2. Dispositif d'accouplement (1) selon la revendication 1, **caractérisé en ce que** les pistons coulissants (120', 120") et les tiges de piston (121', 121") des deux demi-accouplements (10', 10") sont disposés dans les boîtiers des deux demi-accouplements (10', 10") de manière à pouvoir être déplacés l'un par rapport à l'autre.

3. Dispositif d'accouplement (1) selon l'une des revendications 1 ou 2, **caractérisé en ce que** les pistons coulissants (120', 120") sont conçus de manière à avoir des diamètres différents selon les zones et, du fait de leur gradation, reposent sur les éléments d'étanchement par une liaison mécanique, au moins dans un sens.

4. Dispositif d'accouplement (1) selon l'une des revendications précédentes, **caractérisé en ce que** l'effet d'étanchement des éléments de joint (12', 12") est annulé par le déplacement des pistons coulissants (120', 120") à l'encontre de la force de compression des éléments générateurs de force (11', 11").

5. Dispositif d'accouplement (1) selon l'une des revendications précédentes, **caractérisé en ce que** l'étanchéité des deux demi-accouplements (10', 10") à l'atmosphère, lorsqu'ils sont accouplés, est réalisée par un autre joint radial (123") agissant entre la paroi (13') du boitier du demi-accouplement mâle (10') et la tige de piston (121") du demi-accouplement femelle (10").

6. Dispositif d'accouplement (1) selon l'une des revendications précédentes 2 à 4, **caractérisé en ce que** les deux demi-accouplements (10', 10") sont vissés au moyen de filetages correspondants, lors du vissage des deux demi-accouplements (10', 10") la tige de piston (121") d'une part poussant le piston coulissant (120') de l'un demi-accouplement (10'), à l'encontre de la force de l'élément générateur de force (11'), dans le boîtier de l'un demi-accouplement (10') et, d'autre part, la tige de piston (121') poussant le piston coulissant (120"), à l'encontre de la force de l'élément générateur de force (11') conçu comme un ressort de fermeture (11 "), dans le boitier de l'autre demi-accouplement (10").

7. Dispositif d'accouplement (1) selon l'une des revendications précédentes, **caractérisé en ce que** des capuchons de protection (14') et (14") sont prévus sur chaque côté d'accouplement des deux demi-accouplements (10', 10"), le capuchon de protection (14') sur l'un des demi-accouplements (10') comportant au moins un joint radial (140), tandis que le capuchon de protection (14") sur l'autre demi-accouplement (10") utilise le joint radial (123").
